# EUROPEAN PATENT APPLICATION

(11) **EP 4 675 815 A1**
(43) Date of publication of application: **07.01.2026**
(21) Application number: 24887300.2
(22) Date of filing: 30.04.2024
(51) Int. Cl.: H01M 50/367

(54) **BATTERY AND ELECTRICAL APPARATUS**

(30) Priority: 10.11.2023 CN 202311497844
(71) Applicant: Contemporary Amperex Technology Co., Limited, Ningde, Fujian 352100 (CN)
(72) Inventor: LIAO, Boxiang, Ningde, Fujian 352100 (CN); QIN, Feng, Ningde, Fujian 352100 (CN); YANG, Haiqi, Ningde, Fujian 352100 (CN); LU, Zequan, Ningde, Fujian 352100 (CN)
(74) Representative: Lorenz Seidler Gossel Part. mbB
(86) International application number: PCT/CN2024/090915
(87) International publication number: WO 2025/097676

(57) **Abstract**

The present application provides a battery (10) and an electric apparatus (100), the battery (10) includes a cell (11) and a support member (12), the support member (12) is provided with a configuration compartment (120) and an exhaust compartment (122), the cell (11) is disposed in the configuration compartment (120), the cell (11) includes a housing (113), an electrode (111), and a valve member (112), the valve member (112) is disposed on a side of the housing (113) facing the exhaust compartment (122) and is in communication with the exhaust compartment (122) in an open state, and the electrode (111) is disposed on a side of the housing (113) facing away from the valve member (112).

## Description

### CROSS-REFERENCE

The present application incorporates by reference in its entirety Chinese Patent Application No. 202311497844.7, filed on November 10, 2023, entitled "BATTERY AND ELECTRIC APPARATUS".

### TECHNICAL FIELD

The present application relates to the field of new energy technology, and more specifically, to a battery and an electric apparatus.

### BACKGROUND

In general, a cell of a battery is provided with an explosion-proof valve, the explosion-proof valve is disposed on a side where an electrode of the cell is located, the electrode of the cell is electrically connected to other electrical components, and an insulating material needs to be disposed between an electrical connection between the electrode and the electrical components and other easily conductive structures or materials to achieve insulation. Since the explosion-proof valve is disposed on the side where the electrode is located, in a case where a pressure relief mechanism is broken through by high-temperature gas, the high-temperature gas is discharged from the side where the electrode is located, which easily damages the insulating material and causes failure of the insulating material, thereby significantly increasing a risk of short-circuit failure of the cell. This is not conducive to improving safety performance of the battery.

### SUMMARY

One of objectives of embodiments of the present application is to provide a battery and an electric apparatus to solve a technical problem that exhaust of an existing battery disposed on a side where an electrode is located easily causes a risk of explosion of a cell.

To achieve the above purpose, a technical solution adopted by the present application is as follows.

A battery is provided, where the battery includes a cell and a support member, and the support member is provided with a configuration compartment and an exhaust compartment; and
the cell is disposed in the configuration compartment, the cell includes a housing, an electrode, and a valve member, the valve member is disposed on a side of the housing facing the exhaust compartment and is in communication with the exhaust compartment in an open state, and the electrode is disposed on a side of the housing facing away from the valve member.

In the battery provided by the technical solution, the valve member for discharging gas inside the battery is disposed on a side facing away from the electrode, meaning that an electrical connection of the electrode and exhaust of the valve member are separated by the cell itself, such that an insulation setting on the side where the electrode is located is exempted from being affected by the gas discharged from the valve member, and a risk of explosion of the cell is reduced or eliminated.

In some embodiments, the support member includes a frame enclosing the configuration compartment, at least part of the frame is provided with a cavity, and the cavity is in communication with the exhaust compartment.

The addition of the cavity can expand a diffusion space of the gas and extend a flow path of the gas, such that gas pressure can be reduced through expansion, and explosive impurities therein can be filtered through the extended path and cooled, reducing a risk of explosion due to high pressure and high temperature.

In some embodiments, the configuration compartment includes a first compartment and a second compartment spaced apart from each other; and the frame includes a first frame enclosing the first compartment and a second frame enclosing the second compartment, and the cavity includes a first cavity disposed in the first frame and a second cavity disposed in the second frame;
where the first cavity and the second cavity are in communication separately with the exhaust compartment.

The addition of the first cavity and the second cavity can respectively expand the diffusion space of the gas and extend the flow path of the gas, such that the gas pressure can be reduced through expansion, and explosive impurities therein can be filtered through the extended path and cooled, reducing the risk of explosion due to high pressure and high temperature.

In some embodiments, the configuration compartment includes a first compartment and a second compartment spaced apart from each other; and the frame includes a first frame enclosing the first compartment and a second frame enclosing the second compartment, and the cavity includes a first cavity disposed in the first frame and a second cavity disposed in the second frame;
where the first cavity is in communication with the exhaust compartment and the second cavity.

The addition of the first cavity and the second cavity can sequentially further expand the diffusion space of the gas and further extend the flow path of the gas, such that the gas pressure can be further reduced through expansion, and explosive impurities therein can be further filtered through the extended path and cooled, further reducing the risk of explosion due to high pressure and high temperature.

In some embodiments, part of the second frame and part of the first frame overlap and form a common part of the first compartment and the second compartment, and the first compartment and the second compartment are respectively disposed on two sides of the common part.

Part of the first frame or part of the second frame serves as the common part of the first compartment and the second compartment, so that the first compartment and the second compartment are disposed adjacent to each other, and the closer the first compartment and the second compartment are, the more conducive it is to achieve a communication setting between the first cavity and the second cavity.

In some embodiments, the second compartment and the second cavity are disposed in communication.

The gas discharged from the valve member flows through the exhaust compartment, the first cavity, and the second cavity, the temperature and pressure of the gas are effectively reduced, explosive impurities therein are effectively filtered, and the second compartment can be used as an auxiliary expansion space.

In some embodiments, the second frame is provided with a configuration hole, and the second compartment and the second cavity are respectively disposed on two sides of the configuration hole;
the support member includes a gas guiding mechanism, and the gas guiding mechanism is configured in the configuration hole; and
the gas guiding mechanism is provided with a gas gap hole, and the gas gap hole enables communication between the second compartment and the second cavity; or the gas guiding mechanism is in clearance fit with a hole wall of the configuration hole.

The second compartment and the second cavity are kept in communication through the gas gap hole or the clearance fit, allowing a small amount of gas to enter the second compartment, and the second compartment can serve as an auxiliary expansion space to accommodate a small amount of gas.

In some embodiments, the second frame is provided with a configuration hole, and the second compartment and the second cavity are respectively disposed on two sides of the configuration hole; and
the support member includes a hot-melt mechanism configured in the configuration hole, and the hot-melt mechanism is configured to isolate the second compartment and the second cavity in an intact state and enable communication between the second compartment and the second cavity in a state where at least part is hot-melted.

After at least part of the hot-melt mechanism is hot-melted by the gas discharged from the valve member, the communication between the second compartment and the second cavity is enabled, and the second compartment can be used as an auxiliary expansion space.

In some embodiments, the battery includes a gas pressure detection element, and the gas pressure detection element is disposed in the first cavity.

Pressure or temperature after the gas reaches the first cavity is detected through the gas pressure detection element, and if an obtained value exceeds a set threshold, an alarm is triggered to prepare for providing other explosion-proof measures.

In some embodiments, the battery includes a gas pressure detection element, the second compartment and the second cavity are isolated, and the gas pressure detection element is disposed in the second cavity.

The gas pressure detection element detects pressure or temperature of the gas reaching the second cavity, and if an obtained value exceeds a set threshold, an alarm is triggered to prepare for providing other explosion-proof measures.

In some embodiments, the battery includes a gas pressure detection element, the gas pressure detection element includes a sensing portion and a detecting portion connected to the sensing portion, the sensing portion is disposed in the second compartment, and the detecting portion is disposed in the second cavity.

The gas pressure detection element detects pressure or temperature of the gas reaching the second cavity, and if an obtained value exceeds a set threshold, an alarm is triggered to prepare for providing other explosion-proof measures.

In some embodiments, the battery includes a gas pressure detection element, and the gas pressure detection element is disposed in the second compartment.

The gas pressure detection element detects pressure or temperature of the gas reaching the second compartment, and if an obtained value exceeds a set threshold, an alarm is triggered to prepare for providing other explosion-proof measures.

In some embodiments, the first cavity is provided with a plurality of flow guiding structures, the plurality of flow guiding structures are sequentially disposed along an extension direction of the first cavity, and the plurality of flow guiding structures are configured to allow the gas discharged from the valve member to sequentially flow through the plurality of flow guiding structures along the extension direction of the cavity.

The plurality of flow guiding structures can sequentially filter explosive impurities in the gas and sequentially reduce the temperature of the gas, improving a pressure reduction and temperature reduction effect of the first cavity on the gas.

In some embodiments, a part of a cavity wall of the cavity protrudes toward a center of the cavity relative to another part of the cavity wall to form the flow guiding structure.

The flow guiding structure is formed by utilizing part of the cavity wall of the cavity, simplifying a structure of a frame where the cavity is located, simplifying a structure of the support member, and reducing manufacturing costs.

In some embodiments, different flow guiding structures are disposed at different circumferential positions of the cavity, where the extension direction of the cavity is perpendicular to the circumferential direction.

The plurality of flow guiding structures are sequentially disposed along the extension direction of the cavity, different flow guiding structures are disposed at different circumferential positions, and different flow guiding structures can filter and cool the gas from different positions in the circumferential direction, that is, act on the gas from the entire circumferential direction, further improving the pressure reduction and temperature reduction effect on the gas.

In some embodiments, the battery includes a gas pressure detection element, a flow guiding space is formed between two adjacent flow guiding structures, and the gas pressure detection element is disposed in the flow guiding space.

After the gas flows through a first flow guiding structure counting from a side where the exhaust compartment is located, the gas at least enters a first flow guiding space. After the gas is reduced in pressure and temperature by at least one flow guiding structure, the gas is detected to achieve a purpose of setting the flow guiding structure.

In some embodiments, the cavity includes a plurality of sub-cavities, the plurality of sub-cavities are sequentially disposed along a direction perpendicular to the extension direction of the cavity, and any two adjacent sub-cavities communicate.

The plurality of sub-cavities can sequentially filter explosive impurities in the gas and sequentially reduce the temperature of the gas, improving the pressure reduction and temperature reduction effect of the first cavity on the gas.

Another purpose of the embodiments of the present application is to provide an electric apparatus, where the electric apparatus includes the battery as described above.

The electric apparatus provided by the technical solution adopts the battery provided by the above technical solution, and in the battery provided by the above technical solution, an electrical connection side of the cell and an exhaust side of the cell are separated by the cell itself, such that an insulation setting on the electrical connection side is exempted from being affected by the gas discharged from the valve member, the risk of explosion of the cell is reduced or eliminated, and a safety risk of the electric apparatus is reduced or eliminated.

### BRIEF DESCRIPTION OF DRAWINGS

To more clearly illustrate technical solutions in the embodiments of the present application, the drawings required in the description of the embodiments or the prior art will be briefly described below. Obviously, the drawings in the following description are merely some embodiments of the present application, and for those of ordinary skill in the art, other drawings may be obtained according to these drawings without creative efforts.
FIG. 1 is a schematic diagram of an electric apparatus according to an embodiment of the present application;
FIG. 2 is an exploded schematic diagram of a battery according to an embodiment of the present application;
FIG. 3 is a schematic diagram of a battery according to an embodiment of the present application;
FIG. 4 is a cross-sectional view in an A-A direction in FIG. 3;
FIG. 5 is an enlarged view of part A in FIG. 4;
FIG. 6 is a schematic diagram of a battery according to an embodiment of the present application;
FIG. 7 is a schematic diagram of a support member according to an embodiment of the present application;
FIG. 8 is a cross-sectional view in a B-B direction in FIG. 7;
FIG. 9 is an enlarged view of part B in FIG. 8;
FIG. 10 is a schematic diagram of a section where a gas guiding mechanism is located on a second frame according to an embodiment of the present application; and
FIG. 11 is an enlarged view of part C in FIG. 10.

In the drawings, reference signs are as follows:
10. battery; 100. electric apparatus; 101. controller; 102. motor;
11. cell; 12. support member; 13. gas pressure detection element; 14. gas guiding mechanism; 15. upper box body;
111. electrode; 112. valve member; 1111. positive electrode; 1112. negative electrode; 113. housing;
120. configuration compartment; 121. first compartment; 122. exhaust compartment; 123. second compartment; 124. frame; 125. cavity; 126. bottom support plate; 127. bottom protection plate; 128. spacing space; 129. insulating material;
1241. first frame; 1242. second frame; 1242a. configuration hole;
1251. first cavity; 1252. second cavity; 1253. flow guiding structure; 1254. sub-cavity; and
1261. exhaust hole.

### DESCRIPTION OF EMBODIMENTS

To make technical problems to be solved by the present application, technical solutions, and beneficial effects clearer, the present application will be further described in detail below in conjunction with the drawings and embodiments. It should be understood that specific embodiments described herein are only used to explain the present application and are not used to limit the present application.

It should be noted that when an element is referred to as being "fixed to" or "disposed on" another element, it may be directly on the another element or indirectly on the another element. When an element is referred to as being "connected to" another element, it may be directly connected to the another element or indirectly connected to the another element.

It should be understood that orientations or positional relationships indicated by terms such as "length", "width", "upper", "lower", "front", "rear", "left", "right", "vertical", "horizontal", "top", "bottom", "inner", and "outer" are based on orientations or positional relationships shown in the drawings, and are only for convenience of describing the present application and simplifying the description, rather than indicating or implying that an apparatus or element referred to must have a specific orientation, be constructed and operated in a specific orientation, and therefore cannot be understood as limiting the present application.

In addition, terms "first" and "second" are used for descriptive purposes only and cannot be understood as indicating or implying relative importance or implicitly indicating the number of technical features indicated. Thus, a feature defined by "first" or "second" may explicitly or implicitly include one or more of the features. In the description of the present application, "a plurality of" means two or more, unless otherwise specifically defined.

Cell thermal runaway refers to a heat out-of-control phenomenon of a cell triggered by one or more inducements, and the thermal runaway causes a sharp rise in temperature of the cell, synchronously releasing a large amount of heat and harmful gas, and resulting in a risk of battery explosion.

For example, a process of cell thermal runaway leading to battery self-ignition or self-explosion is listed, starting from decomposition of a negative electrode SEI (solid electrolyte interface, solid electrolyte interface) inside the cell. A separator separating the negative electrode and an electrolyte decomposes and melts, the negative electrode reacts with the electrolyte, and a positive electrode and the electrolyte decompose, causing a large-area short circuit inside the cell, and causing the electrolyte to be in a combustion state. This results in the cell thermal runaway, causing the battery to self-ignite and explode.

During normal charging and discharging of the cell, an electrolyte is filled between the positive and negative electrodes of the cell, and directional movement of ions in the electrolyte and directional movement of electrons in an external wire form a closed loop, so that chemical reactions of the positive and negative electrodes continue. An orderly electron transfer process generates current to realize conversion from chemical energy to electrical energy, and therefore the positive and negative electrodes need to be electrically connected to other electrical components.

On this basis, a side where the positive and negative electrodes of the cell are located is generally provided with one or more easily conductive structures or materials. In order to prevent the positive and negative electrodes of the cell from conducting with these structures or materials to cause safety hazards, insulating structures or insulating materials need to be used for insulation isolation, and effective insulation performance needs to be ensured during use of the battery.

In general, the explosion-proof valve is disposed on the side where the positive and negative electrodes of the cell are located. When the cell thermal runaway occurs, the internal temperature of the cell rises sharply, and high-temperature and high-pressure gas is generated at high speed. Under impact of the high-temperature and high-pressure gas, the explosion-proof valve is open and ejects gas toward the side where the electrode of the cell is located, the high-temperature and high-pressure gas easily damages the above insulating structure or insulating material, and insulation failure greatly increases the risk of explosion of the cell.

Based on the above considerations, in order to reduce or eliminate adverse effects of the gas ejected by the cell thermal runaway on an insulation setting on the side where the electrode of the cell is located, a battery is provided, the battery includes a cell and a support member, and the support member is provided with a configuration compartment and an exhaust compartment. The cell is disposed in the configuration compartment, the cell includes a housing, an electrode, and a valve member, the valve member is disposed on a side of the housing facing the exhaust compartment and is in communication with the exhaust compartment in an open state, and the electrode is disposed on a side of the housing facing away from the valve member.

In the battery 10 provided by the technical solution, the valve member 112 for discharging internal gas of the battery 10 is disposed on a side facing away from the electrode 111, meaning that an electrical connection of the electrode 111 and exhaust of the valve member 112 are separated by the cell 11 itself, such that an insulation setting on the side where the electrode 111 is located is exempted from being affected by the gas discharged from the valve member 112, and a risk of explosion of the cell 11 is reduced or eliminated.

In some embodiments, the battery 10 refers to a physical module including one or more battery cells for providing voltage and capacity. For example, it may include a battery cell, a battery module, or a battery pack, and one battery cell may include one cell 11. In general, the battery 10 includes a battery cell and a box for accommodating the battery cell, the box is for accommodating and encapsulating one or more battery cells or battery modules, and the box is for protecting the battery cell and preventing liquid or other foreign matters from affecting charging or discharging of the battery cell.

A battery cell may include a lithium-ion secondary battery, a lithium-ion primary battery, a lithium-sulfur battery, a sodium-lithium-ion battery, a sodium-ion battery, a magnesium-ion battery, or the like, and embodiments of the present application are not limited thereto. The battery cell may be in the shape of a cylinder, a flat body, a rectangular parallelepiped, or other shapes, and embodiments of the present application are not limited thereto. The battery cell is classified into three types based on packaging: a cylindrical battery cell, a prismatic battery cell, and a pouch battery cell, and embodiments of the present application are not limited thereto.

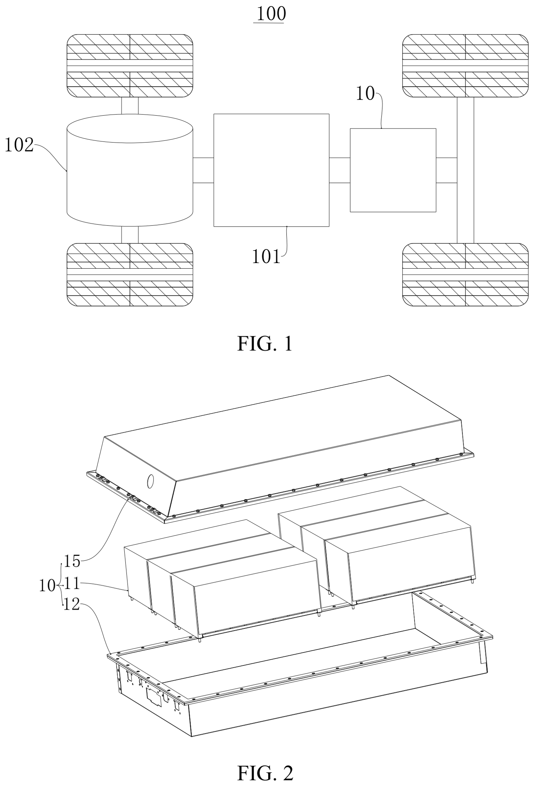

Referring to FIG. 2, the battery cell refers to a smallest unit composing the battery 10. In the battery 10, there may be a plurality of battery cells, and the plurality of battery cells may be connected in series or in parallel or in a mixed connection, where the mixed connection means that there are both series and parallel connections among the plurality of battery cells. The plurality of battery cells may be directly connected in series or in parallel or in a mixed connection, and then an entirety composed of the plurality of battery cells is accommodated in the box. Certainly, the battery 10 may also be in a form of a battery module composed of a plurality of battery cells first connected in series or in parallel or in a mixed connection, and then a plurality of battery modules are connected in series or in parallel or in a mixed connection to form an entirety and accommodated in the box.

The box provides an accommodation space for the battery cell, and the box may adopt various structures. In some embodiments, an example of a box is provided illustratively, the box includes an upper box body 15 and a support member 12, the upper box body 15 and the support member 12 cover each other, and the upper box body 15 and the support member 12 together define an accommodation space for accommodating the battery cell. The support member 12 may be a shell structure with an opening on one side, the upper box body 15 may be a plate-like structure, the upper box body 15 covers an opening side of the support member 12, and the upper box body 15 and the support member 12 together define the accommodation space. The upper box body 15 and the support member 12 may also both be shell structures with an opening on one side, and an opening side of the upper box body 15 covers an opening side of the support member 12. Certainly, the box formed by the upper box body 15 and the support member 12 may be in various shapes, for example, a cylinder or a cuboid.

The electric apparatus 100 provided by the embodiments of the present application may be, but is not limited to, a mobile phone, a tablet, a notebook computer, an electric toy, an electric tool, a battery car, an electric vehicle, a ship, and a spacecraft. The electric toy may include a fixed or mobile electric toy, such as a game console, an electric car toy, an electric ship toy, and an electric airplane toy, and the spacecraft may include an airplane, a rocket, a space shuttle, or a spaceship.

Referring to FIG. 1, the electric apparatus 100 may be a vehicle, the vehicle may be a fuel vehicle, a gas vehicle, or a new energy vehicle, and the new energy vehicle may be a pure electric vehicle, a hybrid vehicle, an extended-range vehicle, or the like. A battery 10 is disposed inside the vehicle, and the battery 10 may be disposed at a bottom, a head, or a tail of the vehicle. The battery 10 may be used for power supply of the vehicle. For example, the battery 10 may serve as an operating power source of the vehicle. The vehicle may further include a controller 101 and a motor 102, and the controller 101 is used to control the battery 10 to supply power to the motor 102, for example, for operating power requirements during starting, navigation, and driving of the vehicle. In some embodiments, the battery 10 may serve not only as an operating power source of the vehicle, but also as a driving power source of the vehicle, replacing or partially replacing fuel or natural gas to provide driving power for the vehicle.

The battery 10 and the electric apparatus 100 provided by the embodiments of the present application are now described.

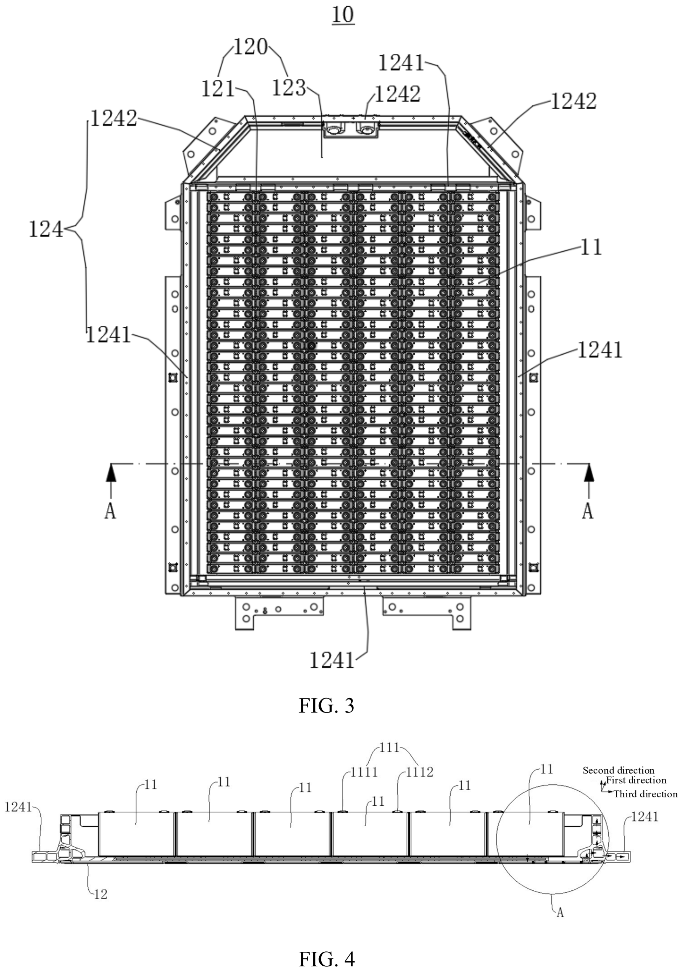

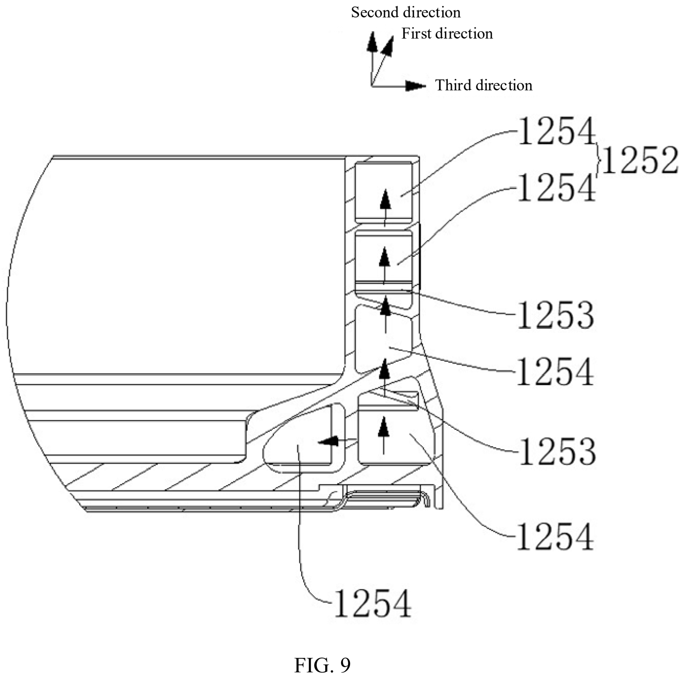

Referring to FIGs. 3 to 11, the battery 10 provided by the embodiments of the present application includes a cell 11 and a support member 12, and the support member 12 is provided with a configuration compartment 120 and an exhaust compartment 122. The cell 11 is provided with a housing 113, an electrode 111, and a valve member 112, the valve member 112 is disposed on a side of the housing 113 facing the exhaust compartment 122 and is in communication with the exhaust compartment 122 in an open state, and the electrode 111 is disposed on a side of the housing 113 facing away from the valve member 112.

The cell 11 refers to a single electrical core body including a single positive electrode 1111 and a single negative electrode 1112, and the cell 11 serves as an electrical energy storage unit and is a smallest unit of the battery 10. Taking a lithium-ion cell 11 as an example, an operating voltage of a single lithium-ion cell 11 is between 3V-5V. In order to meet requirements of high voltage and high capacity required by the electric apparatus 100, a plurality of cells 11 are generally connected in series and parallel to form a battery 10, and electrical energy is provided to the electric apparatus 100 through the battery 10. The cell 11 may be square or cylindrical.

The electrode 111 refers to the positive electrode 1111 and the negative electrode 1112 of the cell 11. In general, the positive electrode 1111 and the negative electrode 1112 are disposed on the same side of the cell 11. For example, the cell 11 has a plurality of side surfaces, and the positive electrode 1111 and the negative electrode 1112 are disposed on the same side surface.

In some embodiments, the positive electrode 1111 and the negative electrode 1112 are disposed on different side surfaces substantially on the same side of the cell 11, a side where the positive electrode 1111 is located and a side where the valve member 112 is located are disposed facing away from each other, and a side where the negative electrode 1112 is located and the side where the valve member 112 is located are also disposed facing away from each other. For example, the cell 11 has a plurality of side surfaces, the positive electrode 1111, the negative electrode 1112, and the valve member 112 are respectively disposed on different side surfaces, a side surface where the positive electrode 1111 is located and a side surface where the negative electrode 1112 is located form an angle, a side surface where the valve member 112 is located is away from and substantially faces away from the side surface where the positive electrode 1111 is located, and the side surface where the valve member 112 is located is also away from and substantially faces away from the side surface where the negative electrode 1112 is located.

The support member 12 refers to a component that can at least lift or place the cell 11, and also refers to a component that allows for orderly arrangement of a plurality of cells 11, playing roles of support, protection, heat dissipation, fire prevention and explosion prevention, or the like. For example, the support member 12 may be part of a box of the battery 10. The support member 12 may also be a plate structure, and one or more cells 11 are positioned on the plate.

The configuration compartment 120 refers to a compartment provided by the support member 12 that can at least be used for placing the cell 11, having a certain volume for placing one or more cells 11. In general, the configuration compartment 120 has a certain height, which is substantially higher than a height of the cell 11, and a plurality of cells 11 are mostly arranged in at least part of the configuration compartment 120 in an array manner.

The exhaust compartment 122 refers to a compartment provided by the support member 12 that is different from the configuration compartment 120 and used for exhaust, having a certain volume, gas discharged from the valve member 112 may be collected in the exhaust compartment 122, or may be discharged to other spaces through the exhaust compartment 122, or discharged out of the battery 10 through the exhaust compartment 122, and the exhaust compartment 122 provides at least part of a path for the gas to be discharged from the cell 11.

In general, a side where the electrode 111 is located faces upward, a side where the valve member 112 is located faces downward, the exhaust compartment 122 is disposed below the configuration compartment 120, the cell 11 is fixed in the configuration compartment 120 through the side where the valve member 112 is located, and the configuration compartment 120 and the exhaust compartment 122 are isolated through the side where the valve member 112 is located.

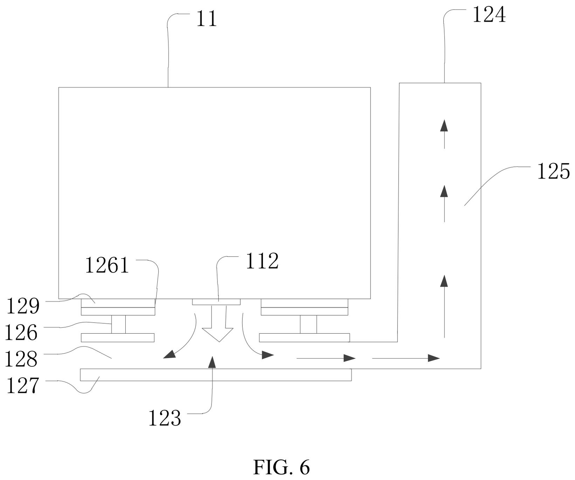

As shown in FIG. 6, in some embodiments, the support member 12 includes a bottom support plate 126 and a bottom protection plate 127 spaced apart from each other, a spacing space 128 is formed between the two, and the cell 11 is disposed on a side of the bottom support plate 126 facing away from the bottom protection plate 127. The bottom support plate 126 is provided with an exhaust hole 1261, the side where the valve member 112 of the cell 11 is located is connected to the bottom support plate 126, the side where the valve member 112 is located covers the exhaust hole 1261, the valve member 112 is exposed in the exhaust hole 1261, gas discharged from the valve member 112 enters the spacing space 128 through the exhaust hole 1261, and the exhaust hole 1261 and the spacing space 128 together form the exhaust compartment 122.

In some embodiments, the battery 10 includes a plurality of cells 11, the bottom support plate 126 is provided with a plurality of exhaust holes 1261, one cell 11 covers one exhaust hole 1261, a plurality of valve members 112 are respectively exposed in the plurality of exhaust holes 1261, and gas discharged from the plurality of valve members 112 all enters the exhaust compartment 122.

In some embodiments, except for a region occupied by the valve member 112 on the side where the valve member 112 is located, other regions on the side where the valve member 112 is located are stacked with the bottom support plate 126 through an insulating material 129. In general, the insulating material 129 does not have performance of conducting current, and its function is to block conduction of current between a metal bottom support plate 126 and a metal core shell of the cell 11.

In some embodiments, the insulating material 129 may be a fluid glue, the bottom support plate 126 and the side where the valve member 112 is located are bonded using the fluid glue, and the fluid glue solidifies to form the insulating material 129, achieving purposes of fixing the cell 11 and insulation.

In the battery 10 provided by this embodiment, the valve member 112 for discharging internal gas of the battery 10 is disposed on a side facing away from the electrode 111, meaning that an electrical connection of the electrode 111 and exhaust of the valve member 112 are separated by the cell 11 itself, such that an insulation setting on the side where the electrode 111 is located is exempted from being affected by the gas discharged from the valve member 112, and a risk of explosion of the cell 11 is reduced or eliminated.

In some embodiments, the support member 12 includes a frame 124 enclosing the configuration compartment 120, at least part of the frame 124 is provided with a cavity 125, and the cavity 125 is in communication with the exhaust compartment 122.

The frame 124 refers to a frame structure disposed on an edge side of the support member 12 and having a certain length, used to separate and define a range of the support member 12. The cell 11 and the exhaust compartment 122 are disposed inside the frame 124, that is, disposed in the range defined by the frame 124.

In some embodiments, the support member 12 may include a plurality of frames 124, and the plurality of frames 124 are spliced end to end to define the range of the support member 12. Alternatively, a part of the plurality of frames 124 encloses and defines a spatial range of the support member 12, and another part of the plurality of frames 124 may separate the spatial range of the support member 12 and divide it into several compartments, with the cell 11 disposed in at least one compartment.

In some embodiments, the support member 12 may be part of a battery box, and the frame 124 may be part of a frame of the battery box.

The cavity 125 refers to a cavity formed by removing part of material inside the frame 124, having a certain extension size or volume, and can extend a flow path of the gas or expand a diffusion volume of the gas. In some embodiments, the cavity 125 extends with a longest size along a length direction of the frame 124.

The addition of the cavity 125 can expand a diffusion space of the gas and extend a flow path of the gas, such that gas pressure can be reduced through expansion, and explosive impurities therein can be filtered through the extended path and cooled, reducing a risk of explosion due to high pressure and high temperature.

In some embodiments, the configuration compartment 120 includes a first compartment 121, and the cell 11 is disposed in the first compartment 121. The frame 124 includes a first frame 1241 enclosing the first compartment 121, the cavity 125 includes a first cavity 1251 disposed in the first frame 1241, and the first cavity 1251 is in communication with the exhaust compartment 122.

The first frame 1241 refers to a frame structure disposed around the cell 11 and having a certain length, used to separate and define a range for placing the cell 11 from the support member 12, and can place one cell 11 or a plurality of cells 11.

In some embodiments, there may be a plurality of first frames 1241, the plurality of first frames 1241 are spliced end to end, and two first cavities 1251 of two adjacent first frames 1241 may be disposed in communication or isolated.

For example, any two adjacent first cavities 1251 are disposed in communication, and the exhaust compartment 122 may be in communication with any one first cavity 1251, or may be in communication separately with a plurality of first cavities 1251. For example, any two adjacent first cavities 1251 are isolated, and the exhaust compartment 122 may be in communication separately with a plurality of first cavities 1251.

The first compartment 121 refers to a compartment formed by enclosing the first frame 1241, and can accommodate a single or a plurality of cells 11.

In some embodiments, the first compartment 121 may be in a shape such as a square, a triangle, a trapezoid, a circle, or an ellipse. For example, the first frame 1241 is linear, with a quantity of four, and four linear first frames 1241 are spliced end to end to form a square or trapezoidal first compartment 121. Alternatively, the first frame 1241 is linear, with a quantity of three, and three linear first frames 1241 are spliced to form a triangular first compartment 121.

The first cavity 1251 is a cavity formed by removing part of material inside a frame body of the first frame 1241, having a certain extension size or volume, and can extend a flow path of the gas in the first frame 1241 or expand a diffusion volume of the gas in the first frame 1241. In some embodiments, the first cavity 1251 extends with a longest size along a length direction of the first frame 1241.

Based on the disposition of the exhaust compartment 122, the addition of the first cavity 1251 can expand a diffusion space of the gas and extend a flow path of the gas, such that gas pressure can be reduced through expansion, and explosive impurities therein can be filtered through the extended path and cooled, reducing a risk of explosion due to high pressure and high temperature.

In some embodiments, the configuration compartment 120 includes a first compartment 121 and a second compartment 123 spaced apart from each other. The frame 124 includes a first frame 1241 enclosing the first compartment 121 and a second frame 1242 enclosing the second compartment 123, the cavity 125 includes a first cavity 1251 disposed in the first frame 1241 and a second cavity 1252 disposed in the second frame 1242. The first cavity 1251 and the second cavity 1252 are in communication separately with the exhaust compartment 122.

In some other embodiments, the configuration compartment 120 includes a first compartment 121 and a second compartment 123 spaced apart from each other. The frame 124 includes a first frame 1241 enclosing the first compartment 121 and a second frame 1242 enclosing the second compartment 123, and the cavity 125 includes a first cavity 1251 disposed in the first frame 1241 and a second cavity 1252 disposed in the second frame 1242. The first cavity 1251 is in communication with the second cavity 1252 and the exhaust compartment 122.

The second frame 1242 refers to a frame structure disposed outside the first frame 1241 and having a certain length, used to separate and define other compartments independent of the first compartment 121 from the support member 12. In some embodiments, the other compartments may be control compartments of the battery 10, and the control compartment is used for accommodating a control part of the battery 10.

In some embodiments, there may be a plurality of second frames 1242, the plurality of second frames 1242 are spliced end to end to form a circumferentially closed frame structure, two second cavities 1252 of two adjacent second frames 1242 are disposed in communication, and any position of the first frame 1241 and any position of the second frame 1242 may be connected through a connecting frame 124 having a connecting cavity 125, so that gas flows from the first cavity 1251 into the second cavity 1252.

In some other embodiments, a plurality of second frames 1242 are spliced in sequence to form a circumferentially open frame structure, and two first frames 1241 farthest apart may be respectively spliced to the first frame 1241, so that gas flows from the first cavity 1251 into the second cavity 1252. Two second cavities 1252 of two adjacent second frames 1242 may be disposed in communication or isolated.

The second compartment 123 refers to a compartment formed by enclosing the second frame 1242, and the second frame 1242 may enclose the second compartment 123 from all sides, or may enclose the second compartment 123 from part of sides with the aid of the first frame 1241.

In some embodiments, the second compartment 123 may be U-shaped. For example, the second frame 1242 is linear, with a quantity of three, three linear second frames 1242 are spliced in sequence to form a U-shaped second compartment 123, and two first frames 1241 farthest apart may be separately spliced to the first frame 1241.

The second cavity 1252 refers to a cavity formed by removing part of material inside a frame body of the second frame 1242, having a certain extension size or volume, and can extend a flow path of the gas in the second frame 1242 or expand a diffusion volume of the gas in the second frame 1242. In some embodiments, the second cavity 1252 extends with a longest size along a length direction of the second frame 1242.

Based on the disposition of the exhaust compartment 122, through the addition of the first cavity 1251 and the second cavity 1252, a diffusion space of the gas can be further expanded and a flow path of the gas can be extended, such that gas pressure can be reduced through expansion, and explosive impurities therein can be filtered through the extended path and cooled, reducing a risk of explosion due to high pressure and high temperature.

In some embodiments, part of the first frame 1241 and part of the second frame 1242 overlap to form a common part of the first compartment 121 and the second compartment 123, and the first compartment 121 and the second compartment 123 are respectively disposed on two sides of the common part.

Compared with the first frame 1241 and the second frame 1242 being connected through a connecting frame 124, part of the first frame 1241 or part of the second frame 1242 serves as the common part of the first compartment 121 and the second compartment 123, so that the first compartment 121 and the second compartment 123 are disposed adjacent to each other, which is more conducive to a communication setting between the first cavity 1251 and the second cavity 1252.

In some embodiments, the second compartment 123 and the second cavity 1252 are disposed in communication.

The gas discharged from the valve member 112 flows through the exhaust compartment 122, the first cavity 1251, and the second cavity 1252, the temperature and pressure of the gas are effectively reduced, explosive impurities therein are effectively filtered, and the second compartment 123 can be used as an auxiliary expansion space.

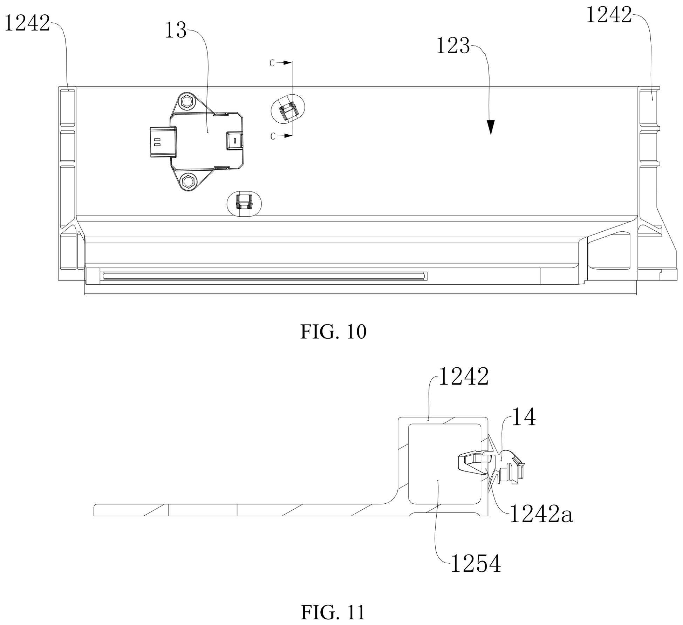

Referring to FIGs. 10 and 11, in some embodiments, the second frame 1242 is provided with a configuration hole 1242a, and the second compartment 123 and the second cavity 1252 are respectively disposed on two sides of the configuration hole 1242a. The support member 12 includes a gas guiding mechanism 14, and the gas guiding mechanism 14 is configured in the configuration hole 1242a. The gas guiding mechanism 14 is provided with a gas gap hole, and the gas gap hole enables communication between the second compartment 123 and the second cavity 1252; or the gas guiding mechanism 14 is in clearance fit with the configuration hole 1242a.

The configuration hole 1242a refers to a hole structure that can allow the second compartment 123 and the second cavity 1252 to communicate, and may be disposed on a common side wall of the second compartment 123 and the second cavity 1252.

The gas guiding mechanism 14 refers to a mechanism configured in the configuration hole 1242a, and can allow gas to enter the second compartment 123 through a cooperation manner with the configuration hole 1242a, or allow gas to enter the second compartment 123 through a gas gap hole provided by itself. For example, the gas guiding mechanism 14 may be a snap-type mechanism that can be snapped into the configuration hole 1242a through a snap-fit manner.

The gas gap hole refers to a hole structure with a small radial size to allow a small amount of gas to pass through. The gas guiding mechanism 14 may be provided with one or more gas gap holes. Moreover, the gas gap hole may be a regular hole structure or an irregular hole structure.

The clearance fit refers to a fit indicating a clearance between two structures and allowing relative positions of two components to be fixed, and the clearance fit allows a small amount of gas to enter the second compartment 123 from the second cavity 1252.

The second compartment 123 and the second cavity 1252 are kept in communication through the gas gap hole or the clearance fit, allowing a small amount of gas to enter the second compartment 123, and the second compartment 123 can serve as an auxiliary expansion space to accommodate a small amount of gas.

In some other embodiments, the second frame 1242 is provided with a configuration hole 1242a, and the second compartment 123 and the second cavity 1252 are respectively disposed on two sides of the configuration hole 1242a. The support member 12 includes a hot-melt mechanism configured in the configuration hole 1242a, and the hot-melt mechanism is configured to isolate the second compartment 123 and the second cavity 1252 in an intact state and enable communication between the second compartment 123 and the second cavity 1252 in a state where at least part is hot-melted.

The hot-melt mechanism refers to a mechanism whose shape is changed or ablated under action of a high-temperature substance, and the hot-melt mechanism may be made of a plastic material with a low melting point, which includes but is not limited to plastic, rubber, and resin.

When thermal runaway occurs in the battery 10, high-temperature and high-pressure gas reaches the second cavity 1252, and the gas contacts the hot-melt mechanism. Since a melting point of the hot-melt mechanism is lower than a temperature of the gas, the hot-melt mechanism is hot-melted by the gas. At least part of the configuration hole 1242a blocked by the hot-melt mechanism is opened, and the communication between the second cavity 1252 and the second compartment 123 is enabled. The hot-melt mechanism may be completely melted or partially melted, as long as the gas can reach the second compartment 123 after contacting the hot-melt mechanism.

After the hot-melt mechanism is hot-melted by the gas discharged from the valve member 112, the communication between the second compartment 123 and the second cavity 1252 is enabled, and the second compartment 123 can be used as an auxiliary expansion space.

In some further embodiments, the second cavity 1252 and the second compartment 123 may communicate through a plurality of fine holes, which can allow a small amount of gas to enter the second compartment 123 at a slower speed, preventing a large amount of gas from entering the second compartment 123 at a faster speed and from adversely affecting functions of components in the second compartment 123.

In some other embodiments, in a case where the exhaust compartment 122, the first cavity 1251, and the second cavity 1252 are sufficient to diffuse the gas, the second compartment 123 may not be used as an auxiliary expansion space, and the second compartment 123 and the second cavity 1252 are isolated.

In some embodiments, without adding the first cavity 1251 and the second cavity 1252, the battery 10 includes a gas pressure detection element 13, and the gas pressure detection element 13 is disposed in the exhaust compartment 122.

Pressure or temperature after the gas reaches the exhaust compartment 122 is detected through the gas pressure detection element 13, and if an obtained value exceeds a set threshold, an alarm is triggered to prepare for providing other explosion-proof measures.

In some embodiments, in a case of separately adding the first cavity 1251, the battery 10 includes a gas pressure detection element 13, and the gas pressure detection element 13 is disposed in the first cavity 1251.

The gas pressure detection element 13 refers to an instrument for measuring gas pressure, and the gas pressure may be displayed through pressure or temperature. In general, the gas pressure detection element 13 includes a sensing portion and a detecting portion, and the sensing portion and the detecting portion are electrically connected to transmit a detection signal. The detecting portion is used to contact the gas and measure the gas pressure, and the sensing portion is used to transmit the detection signal obtained by the detecting portion to an electrical accessory or module in the second compartment 123. For example, it may be transmitted to a control part, and the control part determines whether the detection signal meets a set threshold. In a case where it does not meet the set threshold, the control part controls an alarm mechanism to alarm.

Pressure or temperature after the gas reaches the first cavity 1251 is detected through the gas pressure detection element 13, and if an obtained value exceeds a set threshold, an alarm is triggered to prepare for providing other explosion-proof measures.

In some other embodiments, the gas pressure detection element 13 may also be disposed in the exhaust compartment 122, and the first cavity 1251 is used as an auxiliary expansion space.

The exhaust compartment 122 is a relatively flat space, and its size along a height direction of the cell 11 is small. The first cavity 1251 is more conducive than the exhaust compartment 122 to the disposition of the gas pressure detection element 13. Moreover, since the first cavity 1251 serves as a farthest region that the gas can reach, the gas pressure detection element 13 obtains pressure or temperature of the gas in the first cavity 1251, which is conducive to determining whether the gas ultimately causes a risk of explosion.

Certainly, the gas pressure detection element 13 may also be separately disposed in the exhaust compartment 122 and the first cavity 1251, and changes in gas pressure and temperature are acquired according to gas pressure detection elements 13 at different positions on a gas flow path.

In some embodiments, in a case where the first cavity 1251 and the second cavity 1252 are added and the second cavity 1252 and the second compartment 123 are isolated, the battery 10 includes a gas pressure detection element 13, and the gas pressure detection element 13 is disposed in the second cavity 1252.

Pressure or temperature after the gas reaches the second cavity 1252 is detected through the gas pressure detection element 13, and if an obtained value exceeds a set threshold, an alarm is triggered to prepare for providing other explosion-proof measures.

In some other embodiments, the gas pressure detection element 13 may also be disposed in the first cavity 1251, and the second cavity 1252 is used as an auxiliary expansion space.

Since the second cavity 1252 serves as a farthest region that the gas can reach, when placed in the second cavity 1252 rather than the first cavity 1251, the gas pressure detection element 13 obtains pressure or temperature of the gas in the second cavity 1252, which is conducive to determining whether the gas ultimately causes a risk of explosion.

In some further embodiments, the gas pressure detection element 13 may also be disposed in the exhaust compartment 122, and the first cavity 1251 and the second cavity 1252 are used as auxiliary expansion spaces.

The exhaust compartment 122 is a relatively flat space, and its size along a height direction of the cell 11 is relatively small. The second cavity 1252 is more conducive than the exhaust compartment 122 to the disposition of the gas pressure detection element 13. Moreover, since the second cavity 1252 serves as a farthest region that the gas can reach, the gas pressure detection element 13 obtains pressure or temperature of the gas in the second cavity 1252, which is conducive to determining whether the gas ultimately causes a risk of explosion.

Certainly, the gas pressure detection element 13 may also be separately disposed in the exhaust compartment 122, the first cavity 1251, and the second cavity 1252, and changes in gas pressure and temperature are acquired according to gas pressure detection elements 13 at different positions on a gas flow path.

In some embodiments, in a case where the first cavity 1251 and the second cavity 1252 are added and the second cavity 1252 and the second compartment 123 communicate or are able to communicate, the battery 10 includes a gas pressure detection element 13, and the gas pressure detection element 13 is disposed in the second compartment 123.

For example, in the above embodiment with a gas guiding mechanism or fine holes, the gas pressure detection element 13 may be disposed in the second compartment 123. For example, in the above embodiment with a hot-melt mechanism, the second cavity 1252 and the second compartment 123 are isolated in a normal state and are in communication when thermal runaway occurs in the cell 11, and the gas pressure detection element 13 may be disposed in the second compartment 123.

Pressure or temperature after the gas reaches the second compartment 123 is detected through the gas pressure detection element 13, and if an obtained value exceeds a set threshold, an alarm is triggered to prepare for providing other explosion-proof measures.

In some other embodiments, the gas pressure detection element 13 may also be disposed in at least one of the second cavity 1252, the first cavity 1251, and the exhaust compartment 122.

Since the second compartment 123 serves as a farthest region that the gas can reach, when placed in the second compartment 123 rather than the second cavity 1252, the first cavity 1251, or the exhaust compartment 122, the gas pressure detection element 13 better determines, by requiring pressure or temperature of gas in the second compartment 123, whether the gas ultimately causes a risk of explosion. Moreover, the exhaust compartment 122 is a relatively flat space, and its size along a height direction of the cell 11 is small. The second cavity 1252 is more conducive than the exhaust compartment 122 to the disposition of the gas pressure detection element 13.

Certainly, the gas pressure detection element 13 may also be separately disposed in the exhaust compartment 122, the first cavity 1251, the second cavity 1252, and the second compartment 123, and changes in gas pressure and temperature are acquired according to gas pressure detection elements 13 at different positions on a gas flow path.

In some embodiments, in a case of adding the first cavity 1251 and the second cavity 1252, the second cavity 1252 and the second compartment 123 are isolated or communicate, the battery 10 includes a gas pressure detection element 13, the gas pressure detection element 13 includes a sensing portion and a detecting portion connected to the sensing portion, the sensing portion is disposed in the second compartment 123, and the detecting portion is disposed in the second cavity 1252.

The sensing portion refers to a part of the gas pressure detection element 13, the detecting portion and a control part of the battery 10 are connected through the sensing portion, and data detected by the detecting portion can be sent to the control part.

The detecting portion refers to another part of the gas pressure detection element 13, connected to the sensing portion, capable of detecting gas pressure or temperature in an environment, and sending it to the control part through the sensing portion. For example, it may be a probe or probe structure.

The gas pressure detection element 13 detects pressure or temperature of the gas reaching the second cavity 1252, and if an obtained value exceeds a set threshold, an alarm is triggered to prepare for providing other explosion-proof measures.

For example, in the above embodiment with a gas guiding mechanism or fine holes, the second cavity 1252 and the second compartment 123 communicate, the sensing portion may be disposed in the second compartment 123, and the detecting portion may be disposed in the second cavity 1252.

For example, in the above embodiment with a hot-melt mechanism, the second cavity 1252 and the second compartment 123 are isolated in a normal state and are in communication when thermal runaway occurs in the cell 11, the sensing portion may be disposed in the second compartment 123, and the detecting portion may be disposed in the second cavity 1252.

In some embodiments, the cavity 125 is provided with a plurality of flow guiding structures 1253, the plurality of flow guiding structures 1253 are sequentially disposed along an extension direction of the cavity 125, and the plurality of flow guiding structures 1253 are configured to allow gas discharged from the valve member 112 to sequentially flow through the plurality of flow guiding structures 1253 along the extension direction.

The flow guiding structure 1253 refers to a structure disposed on a flow path of the gas and not hindering normal passage of the gas, and each flow guiding structure 1253 can deflect a direction of the gas about to flow through itself.

Functions of the flow guiding structure 1253 are: in a first aspect, a flow path can be extended, the gas diffuses along the flow path, and pressure of the gas decreases with diffusion. In a second aspect, a contact area and contact time between the gas and a solid structure can be increased, thereby reducing a gas temperature. In a third aspect, part of explosive impurities can be blocked through the flow guiding structure 1253, and after actions of a plurality of flow guiding structures 1253, the explosive impurities are effectively filtered.

The plurality of flow guiding structures 1253 can sequentially filter explosive impurities in the gas and sequentially reduce the temperature of the gas, improving a pressure reduction and temperature reduction effect of the first cavity 1251 on the gas.

In some embodiments, a part of a cavity wall of the cavity 125 protrudes toward a center of the cavity 125 relative to another part of the cavity wall to form the flow guiding structure 1253.

The flow guiding structure 1253 is formed by utilizing part of the cavity wall of the cavity 125, simplifying a structure of a frame where the cavity 125 is located, simplifying a structure of the support member 12, and reducing manufacturing costs.

In some other embodiments, different flow guiding structures 1253 are disposed at different circumferential positions of the cavity 125, and the extension direction of the cavity 125 is perpendicular to the circumferential direction.

The plurality of flow guiding structures 1253 are sequentially disposed along the extension direction of the cavity 125, different flow guiding structures 1253 are disposed at different circumferential positions, and different flow guiding structures 1253 can filter and cool the gas from different positions in the circumferential direction, that is, act on the gas from the entire circumferential direction, further improving the pressure reduction and temperature reduction effect on the gas.

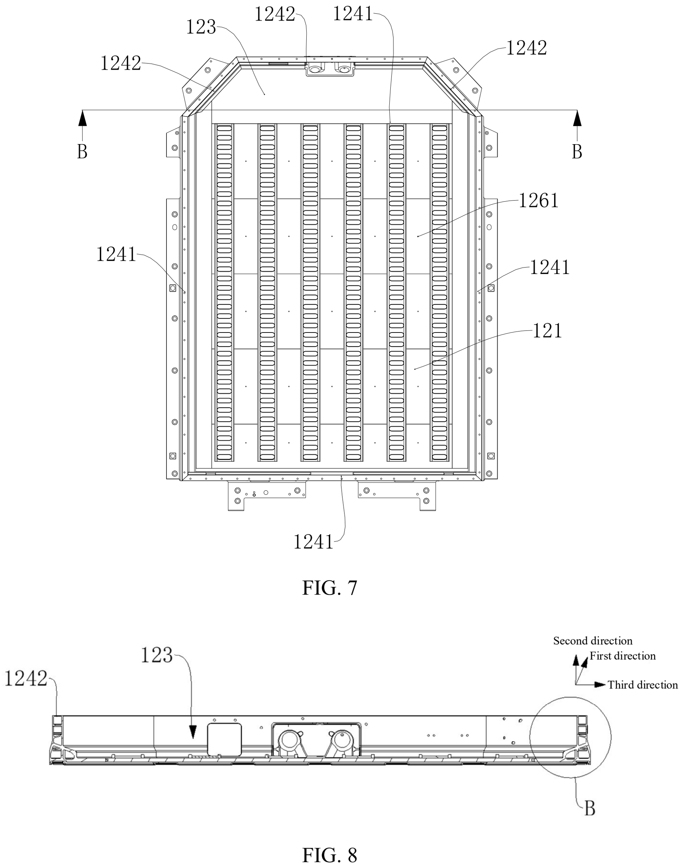

In some embodiments, the extension direction of the cavity 125 is a length direction of the cavity 125, that is, a first direction in FIGs. 4 and 8. In addition to sequentially disposing a plurality of flow guiding structures 1253 along the length direction of the cavity 125, a plurality of flow guiding structures 1253 may also be disposed along a second direction or a third direction of the cavity 125, and the length direction, the second direction, and the third direction of the cavity 125 are pairwise perpendicular.

The plurality of flow guiding structures 1253 may be arranged along at least one of the first direction, the second direction, and the third direction, such that an arrangement direction of the plurality of flow guiding structures 1253 can be flexibly set according to a cross-sectional structure of the support member 12, avoiding the impact of a specific structure of the support member 12 on the arrangement of the plurality of flow guiding structures 1253, and a plurality of flow guiding structures 1253 can be respectively arranged in a plurality of directions to improve a cooling and pressure reduction effect on the gas.

In some embodiments, in a case where a cross-sectional area of the cavity 125 is small, the extension direction of the cavity 125 is selected as the first direction, that is, the length direction of the cavity 125, meaning that the plurality of flow guiding structures 1253 are sequentially disposed along the length direction.

In some other embodiments, in a case where the cross-sectional area of the cavity 125 is large, in addition to disposing a plurality of flow guiding structures 1253 along the first direction in the cavity 125, a plurality of flow guiding structures 1253 are also disposed along the second direction in the cavity 125, and a plurality of flow guiding structures 1253 are also disposed along the third direction in the cavity 125.

It should be noted that whether flow guiding structures 1253 can be disposed along the second direction and the third direction in the cavity 125 depends on a cross-sectional shape of the frame 124. For example, if the cross-sectional shape of the frame 124 is substantially L-shaped or T-shaped, a plurality of flow guiding structures 1253 may be disposed in each of the first direction, the second direction, and the third direction. For example, if the cross-sectional shape of the frame 124 is substantially I-shaped, a plurality of flow guiding structures 1253 may be disposed in each of the first direction and the second direction.

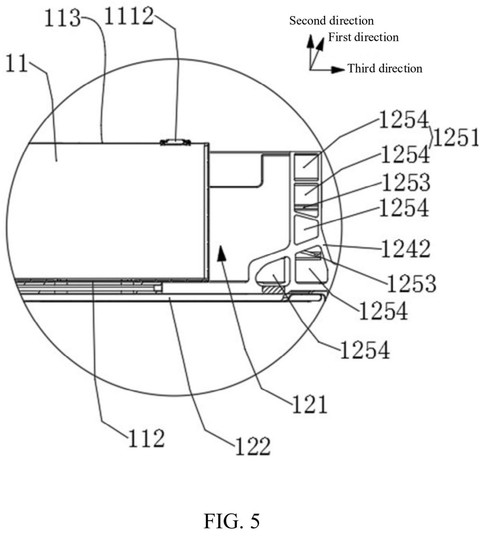

As an example, as shown in FIGs. 4 and 5, the cross-sectional shape of the frame 124 is substantially inverted T-shaped, and the cavity 125 extends with sizes in the first direction, the second direction, and the third direction. A size extending along the first direction is much larger than sizes extending along the second direction and the third direction, and the number of the flow guiding structures 1253 that can be disposed in the first direction is much more than the number of the flow guiding structures 1253 that can be disposed in the second direction and the third direction.

In some embodiments, the battery 10 includes a gas pressure detection element 13, a flow guiding space is formed between two adjacent flow guiding structures 1253, and the gas pressure detection element 13 is disposed in a first or subsequent flow guiding space counting from a side where the exhaust compartment 122 is located.

After the gas flows through a first flow guiding structure 1253 counting from the side where the exhaust compartment 122 is located, it enters a space between the first flow guiding structure 1253 and a second flow guiding structure 1253, that is, a first flow guiding space. After the gas is reduced in pressure and temperature by at least one flow guiding structure 1253, the gas is detected to achieve a purpose of setting the flow guiding structure 1253.

In some embodiments, in a case of separately adding the first cavity 1251, the first cavity 1251 may be provided with the above plurality of flow guiding structures 1253. In the first cavity 1251, the gas pressure detection element 13 is disposed in a first or subsequent flow guiding space counting from the side where the exhaust compartment 122 is located.

In some embodiments, in a case of adding the first cavity 1251 and the second cavity 1252, at least one of the first cavity 1251 and the second cavity 1252 is provided with the above plurality of flow guiding structures 1253. For example, the first cavity 1251 and the second cavity 1252 are respectively provided with a plurality of flow guiding structures 1253, and the second cavity 1252 is provided with the gas pressure detection element 13. In the second cavity 1252, the gas pressure detection element 13 is disposed in a first or subsequent flow guiding space counting from a side where the first cavity 1251 is located. For the second cavity 1252, the side where the first cavity 1251 is located is the side where the exhaust compartment 122 is located.

In some embodiments, the cavity 125 includes a plurality of sub-cavities 1254, the plurality of sub-cavities 1254 are sequentially disposed along a direction perpendicular to the extension direction of the cavity 125, and any two adjacent sub-cavities 1254 communicate.

For example, any two adjacent sub-cavities 1254 communicate through a through hole provided in a common side wall.

The sub-cavity 1254 refers to part of a cavity of the first cavity 1251, adjacent sub-cavities 1254 are separated by a common side wall, two adjacent sub-cavities 1254 are in communication with each other, and a plurality of sub-cavities 1254 communicate and form an assembly of the cavity 125.

The plurality of sub-cavities 1254 can sequentially filter explosive impurities in the gas and sequentially reduce the temperature of the gas, improving a pressure reduction and temperature reduction effect of the first cavity 1251 on the gas.

In some embodiments, the extension direction of the cavity 125 is a length direction of the cavity 125, that is, a first direction in FIGs. 4 and 8. The plurality of sub-cavities 1254 may be sequentially disposed along a second direction, and the plurality of sub-cavities 1254 may also be sequentially disposed along a third direction. The length direction, the second direction, and the third direction of the cavity 125 are pairwise perpendicular.

The plurality of sub-cavities 1254 may be arranged along at least one of the second direction and the third direction, such that an arrangement direction of the plurality of sub-cavities 1254 can be flexibly set according to a cross-sectional shape of the frame 124, avoiding the impact of a specific shape of the frame 124 on the arrangement of the plurality of sub-cavities 1254, and a plurality of sub-cavities 1254 can be respectively arranged in a plurality of directions to improve a cooling and pressure reduction effect on the gas.

It should be noted that whether the cavity 125 can be divided into a plurality of sub-cavities 1254 along the second direction and the third direction depends on the cross-sectional shape of the frame 124. For example, if the cross-sectional shape of the frame 124 is substantially L-shaped or T-shaped, the cavity 125 may be divided to form a plurality of sub-cavities 1254 in each of the second direction and the third direction. For example, if the cross-sectional shape of the frame 124 is substantially I-shaped, the cavity 125 may be divided to form a plurality of sub-cavities 1254 in the second direction.

As an example, as shown in FIGs. 4 and 5, the cross-sectional shape of the frame 124 is substantially inverted T-shaped, the cavity 125 extends with sizes in the second direction and the third direction, and the cavity 125 may be divided to form a plurality of sub-cavities 1254 in the second direction, or the cavity 125 may be divided to form a plurality of sub-cavities 1254 in the third direction.

In some embodiments, in a case of separately adding the first cavity 1251, the first cavity 1251 may be divided to form a plurality of sub-cavities 1254 in at least one of the second direction and the third direction, and each sub-cavity 1254 may be provided with a plurality of flow guiding structures 1253 along its length direction. A gas pressure detection element 13 may be disposed in any sub-cavity 1254, and the gas pressure detection element 13 is disposed in a first or subsequent flow guiding space counting from the side where the exhaust compartment 122 is located.

In some embodiments, in a case of adding the first cavity 1251 and the second cavity 1252, at least one of the first cavity 1251 and the second cavity 1252 may be divided to form a plurality of sub-cavities 1254 in at least one direction.

For example, in the first cavity 1251, the first cavity 1251 has a second direction and a third direction respectively perpendicular to its length direction, and the first cavity 1251 is respectively divided to form a plurality of sub-cavities 1254 in the second direction and the third direction. Further, each sub-cavity 1254 in the first cavity 1251 may be provided with a plurality of flow guiding structures 1253 along its length direction. In any sub-cavity 1254 of the first cavity 1251, a gas pressure detection element 13 may be disposed, and the gas pressure detection element 13 is disposed in a first or subsequent flow guiding space counting from the side where the exhaust compartment 122 is located.

For example, in the second cavity 1252, the second cavity 1252 has a second direction and a third direction respectively perpendicular to its length direction, and the second cavity 1252 is respectively divided to form a plurality of sub-cavities 1254 in the second direction and the third direction. Further, each sub-cavity 1254 in the second cavity 1252 may be provided with a plurality of flow guiding structures 1253 along its length direction. In any sub-cavity 1254 of the second cavity 1252, a gas pressure detection element 13 may be disposed, and the gas pressure detection element 13 is disposed in a first or subsequent flow guiding space counting from the side where the first cavity 1251 is located.

In a case where both the first cavity 1251 and the second cavity 1252 are divided into a plurality of sub-cavities 1254, at least one sub-cavity 1254 in the first cavity 1251 is in communication with at least one sub-cavity 1254 in the second cavity 1252.

In some embodiments, the frame 124 includes four first frames 1241 and three second frames 1242, and the first frames 1241 and the second frames 1242 are all linear. Four linear first frames 1241 are spliced end to end to form a square first compartment 121. Three linear second frames 1242 are spliced in sequence to form a U-shaped first compartment 121. Two second frames 1242 farthest apart are respectively connected to two ends of the same first frame 1241, and the first frame 1241 serves as a common part of the first compartment 121 and the second compartment 123. Each first cavity 1251 and second cavity 1252 is divided into a plurality of sub-cavities 1254, and each sub-cavity 1254 is provided with a plurality of flow guiding structures 1253. Moreover, the second cavity 1252 and the second compartment 123 communicate through a gas guiding mechanism, or are isolated in a normal state through a hot-melt mechanism and communicate in a hot-melt state, and the second compartment 123 is provided with a gas pressure detection element 13.

Another purpose of the embodiments of the present application is to provide an electric apparatus 100, where the electric apparatus 100 includes the above battery 10.

The electric apparatus 100 provided by the technical solution adopts the battery 10 provided by the above technical solution, and in the battery 10 provided by the above technical solution, an electrical connection side of the cell 11 and an exhaust side of the cell 11 are separated by the cell 11 itself, such that an insulation setting on the electrical connection side is exempted from being affected by the gas discharged from the valve member 112, the risk of explosion of the cell 11 is reduced or eliminated, and a safety risk of the electric apparatus 100 is reduced or eliminated.

The above are only preferred embodiments of the present application and are not intended to limit the present application. Any modifications, equivalent replacements, improvements, or the like made within the spirit and principles of the present application should be included in the protection scope of the present application.

## Claims

1. A battery, **characterized in that**:
the battery comprises a cell and a support member, and the support member is provided with a configuration compartment and an exhaust compartment; and
the cell is disposed in the configuration compartment, the cell comprises a housing, an electrode, and a valve member, the valve member is disposed on a side of the housing facing the exhaust compartment and is in communication with the exhaust compartment in an open state, and the electrode is disposed on a side of the housing facing away from the valve member.

2. The battery according to claim 1, **characterized in that**:
the support member comprises a frame enclosing the configuration compartment, at least part of the frame is provided with a cavity, and the cavity is in communication with the exhaust compartment.

3. The battery according to claim 2, **characterized in that**:
the configuration compartment comprises a first compartment and a second compartment spaced apart from each other; the frame comprises a first frame enclosing the first compartment and a second frame enclosing the second compartment, and the cavity comprises a first cavity disposed in the first frame and a second cavity disposed in the second frame;
wherein the first cavity and the second cavity are in communication separately with the exhaust compartment.

4. The battery according to claim 2, **characterized in that**:
the configuration compartment comprises a first compartment and a second compartment spaced apart from each other; and the frame comprises a first frame enclosing the first compartment and a second frame enclosing the second compartment, and the cavity comprises a first cavity disposed in the first frame and a second cavity disposed in the second frame;
wherein the first cavity is in communication with the exhaust compartment and the second cavity.

5. The battery according to claim 3 or 4, **characterized in that**:
part of the first frame and part of the second frame overlap to form a common part of the first compartment and the second compartment, and the first compartment and the second compartment are respectively disposed on two sides of the common part.

6. The battery according to any one of claims 3 to 5, **characterized in that**:
the second compartment and the second cavity are disposed in communication.

7. The battery according to claim 6, **characterized in that**:
the second frame is provided with a configuration hole, and the second compartment and the second cavity are respectively disposed on two sides of the configuration hole; and the support member comprises a gas guiding mechanism, and the gas guiding mechanism is configured in the configuration hole; and
the gas guiding mechanism is provided with a gas gap hole, and the gas gap hole enables communication between the second compartment and the second cavity; or the gas guiding mechanism is in clearance fit with a hole wall of the configuration hole.

8. The battery according to any one of claims 3 to 5, **characterized in that**:
the second frame is provided with a configuration hole, and the second compartment and the second cavity are respectively disposed on two sides of the configuration hole; and
the support member comprises a hot-melt mechanism configured in the configuration hole, and the hot-melt mechanism is configured to isolate the second compartment and the second cavity in an intact state and enable communication between the second compartment and the second cavity in a state where at least part is hot-melted.

9. The battery according to any one of claims 2 to 8, **characterized in that**:
the battery comprises a gas pressure detection element, and the gas pressure detection element is disposed in the cavity.

10. The battery according to any one of claims 3 to 5, **characterized in that**:
the battery comprises a gas pressure detection element, the second compartment and the second cavity are isolated, and the gas pressure detection element is disposed in the second cavity.

11. The battery according to any one of claims 3 to 8, **characterized in that**:
the battery comprises a gas pressure detection element, the gas pressure detection element comprises a sensing portion and a detecting portion connected to the sensing portion, the sensing portion is disposed in the second compartment, and the detecting portion is disposed in the second cavity.

12. The battery according to any one of claims 6 to 8, **characterized in that**:
the battery comprises a gas pressure detection element, and the gas pressure detection element is disposed in the second compartment.

13. The battery according to any one of claims 2 to 8, **characterized in that**:
the cavity is provided with a plurality of flow guiding structures, the plurality of flow guiding structures are sequentially disposed along an extension direction of the cavity, and the plurality of flow guiding structures are configured to allow gas discharged from the valve member to sequentially flow through the plurality of flow guiding structures along the extension direction of the cavity.

14. The battery according to claim 13, **characterized in that**:
a part of a cavity wall of the cavity protrudes toward a center of the cavity relative to another part of the cavity wall to form the flow guiding structure.

15. The battery according to claim 14, **characterized in that**:
different flow guiding structures are disposed at different circumferential positions of the cavity;
wherein the extension direction of the cavity is perpendicular to the circumferential direction.

16. The battery according to any one of claims 13 to 15, **characterized in that**:
the battery comprises a gas pressure detection element, a flow guiding space is formed between two adjacent flow guiding structures, and the gas pressure detection element is disposed in the flow guiding space.

17. The battery according to any one of claims 13 to 16, **characterized in that**:
the cavity comprises a plurality of sub-cavities, the plurality of sub-cavities are sequentially disposed along a direction perpendicular to the extension direction of the cavity, and any two adjacent sub-cavities communicate.

18. An electric apparatus, **characterized in that**: the electric apparatus comprises the battery according to any one of claims 1 to 17.
